# DEMANDE DE BREVET EUROPEEN

(11) **EP 2 124 120 A1**
(43) Date de publication de la demande: **25.11.2009**
(21) Numéro de dépôt: 09157050.7
(22) Date de dépôt: 01.04.2009
(51) Int. Cl.: G05B 23/02

(54) **Procédé d'aide au diagnostic pour la détermination de cause(s) de dysfonctionnement(s) dans un système complexe**

(30) Priorité: 19.05.2008 FR 0853237
(71) Demandeur: PEUGEOT CITROËN AUTOMOBILES S.A., 78140 Vélizy Villacoublay (FR)
(72) Inventeur: Croc, François, 92600, ASNIERES SUR SEINE (FR)
(74) Mandataire: Vigand, Régis Louis Michel

(57) **Abrégé**

Un procédé d'aide au diagnostic, pour un système complexe comprenant des constituants participant à des fonctions, consiste à prévoir une table (TC) de correspondance entre des dysfonctionnements de constituants, des effets au sein du système et des éléments de détection, et, en cas d'occurrence d'au moins un problème dans le système, à déterminer dans cette table (TC) i) au moins un effet ou un code de défaut correspondant à ce problème, puis ii) au moins un constituant correspondant à l'effet ou code de défaut déterminé, puis iii) au moins un élément de détection à appliquer au constituant déterminé, de manière à contrôler s'il constitue une cause du problème.

## Description

L'invention concerne le domaine de l'aide au diagnostic pour des systèmes complexes, comme par exemple des véhicules automobiles.

On entend ici par « système complexe » un système (ou appareil ou encore objet) constitué d'un nombre important de constituants, électriques, électroniques et/ou mécaniques. Il pourra par exemple et non limitativement s'agir d'un véhicule automobile.

La plupart des dispositifs (ou outils) d'aide au diagnostic (utilisés en garage comme en usine) ne peuvent détecter que des causes liées à des dysfonctionnements électriques ou électroniques, c'est-à-dire touchant des constituants de type calculateur, capteur, actionneur, réseau (ou bus) multiplexé ou fil électrique. C'est notamment le cas du dispositif décrit dans le document brevet FR 2849236. Les dysfonctionnements survenant sur des constituants participant à des fonctions mécaniques ou hydrauliques ou encore aérauliques n'étant généralement pas pris en compte, certaines recherches de causes de dysfonctionnement peuvent donc être relativement longues et/ou entraîner des déposes non justifiées de constituants (comme par exemple des calculateurs).

Il a certes été proposé dans le document brevet EP 0443212 un dispositif d'aide au diagnostic plus sophistiqué permettant de déterminer un syndrome à partir de symptômes préalablement déterminés, puis de déterminer au moins une hypothèse de dysfonctionnement à partir du syndrome déterminé, et enfin de déterminer au moins un test à effectuer pour vérifier si l'hypothèse déterminée est la bonne. Mais, ce type de dispositif s'avère encore trop limité tant en terme d'applications qu'en terme de types de symptôme (ou effet) pris en compte.

L'invention a donc pour but d'améliorer la situation.

Elle propose à cet effet un procédé, dédié à l'aide au diagnostic pour un système complexe comprenant des constituants participant à des fonctions, comme par exemple un véhicule automobile, et consistant :
- à prévoir une table de correspondance entre des dysfonctionnements de constituants, des effets au sein du système et des éléments de détection, et
- en cas d'occurrence d'au moins un problème dans le système, à déterminer dans la table i) au moins un effet ou un code de défaut correspondant à ce problème, puis ii) au moins un constituant correspondant à cet effet ou à ce code de défaut déterminé, puis iii) au moins un élément de détection à appliquer au constituant déterminé, de manière à contrôler s'il constitue une cause du problème.

Le procédé selon l'invention peut comporter d'autres caractéristiques qui peuvent être prises séparément ou en combinaison, et notamment :
- on peut déterminer dans la table i) chaque effet ou chaque code de défaut correspondant au problème, puis ii) chaque constituant correspondant à chaque effet ou code de défaut déterminé, puis iii) chaque élément de détection à appliquer au constituant déterminé, de manière à contrôler s'il constitue une cause du problème ;
- les éléments de détection peuvent par exemple être choisis parmi (au moins) des codes de défaut, des mesures de paramètre(s) interne(s), des commandes d'actionneurs, des tests de cohérence, des tests sensoriels et des tests avec des appareils de mesure ;
- lorsque l'on prévoit dans la table une différenciation entre des codes de défaut dits source et des codes de défaut dits induits, et lorsque l'on a déterminé dans la table un code de défaut source associé à au moins un code de défaut induit, on peut commencer par déterminer dans la table au moins un constituant correspondant au code de défaut source, puis au moins un élément de détection à appliquer au constituant déterminé, de manière à contrôler s'il constitue une cause dudit problème, et dans la négative on peut déterminer dans la table au moins un constituant correspondant au code de défaut induit qui est associé au code de défaut source, puis au moins un élément de détection à appliquer au constituant déterminé, de manière à contrôler s'il constitue une cause dudit problème ;
- les effets peuvent par exemple être choisis parmi (au moins) des états de voyants, des messages adressés, des modes dégradés de fonctionnement, des constatations définies, et le nombre d'occurrences d'un problème ;
- certains des dysfonctionnements de constituant de la table peuvent être associés à des informations complémentaires qui sont choisies parmi (au moins) une probabilité d'occurrence et une situation de vie au cours de laquelle se produit un dysfonctionnement ;
- lorsque l'on a déterminé plusieurs constituants, on peut trier ces constituants en fonction de leurs probabilités d'occurrence, et on peut commencer par appliquer chaque élément de détection correspondant au constituant qui est associé à la probabilité d'occurrence la plus élevée, puis on peut passer au constituant suivant qui est associé à la probabilité d'occurrence qui est la plus proche de la probabilité d'occurrence la plus élevée ;
- lorsque l'on a déterminé une combinaison d'effets ou de codes de défaut correspondant à un unique constituant, on peut ne pas déterminer d'élément de détection à appliquer à cet unique constituant (en d'autres termes, si on a déterminé un unique constituant, la cause est trouvée, c'est ce constituant et donc il n'y a plus besoin d'effectuer des recherches supplémentaires) ;
- on peut déterminer dans la table au moins un effet ou un code de défaut et une fonction correspondant au problème, puis on peut déterminer au moins un constituant correspondant à cet effet ou code de défaut et à cette fonction déterminés.

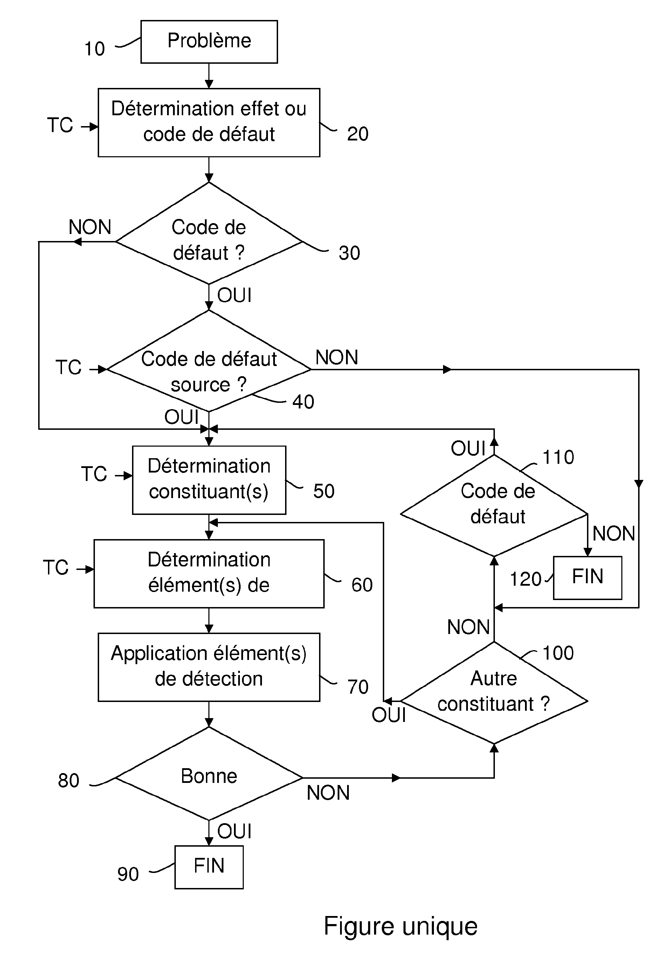

D'autres caractéristiques et avantages de l'invention apparaîtront à l'examen de la description détaillée ci-après, et du dessin annexé, sur lequel l'unique figure illustre un algorithme d'un exemple de procédé d'aide au diagnostic selon l'invention. Le dessin annexé pourra non seulement servir à compléter l'invention, mais aussi contribuer à sa définition, le cas échéant.

L'invention propose un procédé qui est destiné à aider à effectuer des diagnostics au sein d'un système complexe comprenant des constituants participant à des fonctions.

On considère dans ce qui suit, à titre d'exemple non limitatif, que le système complexe est un véhicule automobile. Dans ce cas, les fonctions auxquelles participent les constituants sont par exemple la climatisation, l'éclairage interne, l'éclairage externe, le groupe moto-propulseur et l'accès au véhicule. A titre d'exemple la fonction climatisation est notamment constituée par un compresseur, un détendeur et un évaporateur. Mais, l'invention n'est pas limitée à ce type de système complexe.

Le procédé selon l'invention est basé sur l'utilisation d'une table de correspondance TC qui établit des correspondances entre des dysfonctionnements de constituants, des effets (ou symptômes) au sein du système complexe (ici un véhicule automobile), et des éléments de détection.

On notera que l'on parle généralement d'effet lorsque l'on se place du côté de la conception du système complexe (c'est-à-dire en bureau d'études ou en usine), et de symptôme lorsque l'on se place du côté d'un service après-vente. Par ailleurs, un symptôme est généralement considéré comme l'équivalent d'au moins un effet (et fréquemment plusieurs - en fait un symptôme peut désigner plusieurs effets appartenant à une même famille mais présentant des intensités (ou valeurs) différentes).

Tout type d'élément de détection connu de l'homme de l'art peut être ici utilisé. Ainsi, il pourra par exemple et non limitativement s'agir de codes de défaut (ou DTC (pour « Data Troubleshooting Code ») - qui résultent d'opérations (de surveillance fonctionnelle ou électrique) d'autodiagnostic effectuées par le véhicule), de mesures de paramètre(s) interne(s), physique(s) ou non physique(s), de commandes d'actionneurs, de tests de cohérence, de tests sensoriels (c'est-à-dire impliquant au moins l'un des quatre sens (ouïe, vue, odorat, toucher)), et des tests avec des appareils de mesure (comme par exemple un voltmètre ou un débitmètre).

On notera qu'il est avantageux de subdiviser les codes de défaut en codes de défaut dits source et codes de défaut dits induits du fait qu'ils sont associés à un code de défaut source et ne peuvent donc être générés que si ce dernier est également généré.

On notera également que l'on appelle généralement i) « diagnostic embarqué » la détection faite automatiquement par le véhicule sur certains de ses constituants, ii) « diagnostic embarqué/débarqué » les mesures de paramètres et les tests d'actionneurs qui sont internes au véhicule et qui sont lus ou activés au moyen d'un outil de diagnostic, et iii) « diagnostic débarqué » les tests sensoriels effectués par un technicien sans appareil (par exemple l'absence de claquement audible peut signaler un compresseur hors service, ou bien l'absence d'air au niveau d'une sortie peut signaler un problème sur un micro-moteur pilotant le volet contrôlant l'accès à cette sortie ou un problème sur ce dernier volet, ou encore peu ou pas de variation de niveau d'eau peut signaler un problème de réchauffeur), et les tests effectués par un technicien avec des appareils.

Tout type d'effet (ou symptôme) connu de l'homme de l'art peut être ici utilisé. Ainsi, dans le cas d'un véhicule automobile il pourra par exemple et non limitativement s'agir d'états de voyants, de messages adressés au conducteur par diffusion sonore et/ou par affichage sur un écran, de modes dégradés de fonctionnement du véhicule (définis par le constructeur et mis en oeuvre lorsque le véhicule se trouve dans certaines situations prédéfinies), des constatations définies (comme par exemple la climatisation ne produit pas de froid ou le moteur ne démarre pas), et le nombre d'occurrences d'un problème.

Tout type de dysfonctionnement (ou défaillance ou problème) de constituant connu de l'homme de l'art peut être ici utilisé.

On notera que certains dysfonctionnements de constituant de la table de correspondance TC peuvent être associés à des informations complémentaires comme par exemple la référence ou le nom du constituant présentant un dysfonctionnement et/ou la référence ou le nom d'une variante (ou d'une option) du constituant présentant un dysfonctionnement et/ou la probabilité d'occurrence et/ou la situation de vie au cours de laquelle se produit un dysfonctionnement (par exemple à l'arrêt, au démarrage, en salle d'exposition ou en phase de circulation) et/ou la fonction ou sous-fonction à laquelle appartient au moins un constituant présentant un dysfonctionnement.

La table de correspondance TC se présente par exemple sous la forme d'un tableau à colonnes multiples et à lignes multiples, dans lequel chaque ligne correspond à un problème répertorié. Elle peut par exemple être stockée dans un dispositif (ou outil) de diagnostic chargé d'effectuer les diagnostics et donc de mettre en oeuvre le procédé selon l'invention.

Selon l'invention, lorsqu'au moins un problème survient dans le véhicule, on accède à la table de correspondance TC afin de procéder à trois déterminations.

Une première détermination consiste à rechercher au moins un effet ou un code de défaut qui correspond au (à chaque) problème survenu. On comprendra que l'on peut détecter un problème dans un véhicule en fonction d'informations qui sont fournies par le conducteur du véhicule ou un technicien, consécutivement à la réception de message(s) ou à l'observation d'un dysfonctionnement par au moins un sens (ouïe, vue, odorat, toucher). En présence de telles informations, on peut par exemple tenter de reproduire le problème rencontré (par exemple si on n'arrive pas à verrouiller les portes, on met la clim en route et l'on constate qu'effectivement elle ne fait pas de froid). Ensuite, on peut connecter un outil dédié à l'ordinateur de bord (ou à un calculateur particulier) afin de lire des codes de défaut qui ont été éventuellement générés consécutivement à la reproduction du problème. Si on ne réussit pas à reproduire le problème, on connecte également l'outil dédié à l'ordinateur de bord (ou à un calculateur particulier) afin de lire des codes de défaut générés. Par conséquent, lorsque l'on utilise un dispositif de diagnostic, on peut lui fournir le(s) code(s) de défaut récupéré(s) ou la définition du (des) problème(s) survenu(s), afin qu'il détermine dans la table de correspondance TC soit l'effet (ou les effets) qui correspond(ent) à ce(s) problème(s), soit le(s) code(s) de défaut récupéré(s). Il est important de noter qu'une définition de problème est préférentiellement constituée d'au moins un effet ou symptôme répertorié.

On notera que dans certains cas, la première détermination peut être facilitée lorsque l'on a déterminé non seulement le problème (et donc au moins un effet ou un code de défaut) mais également la fonction ou sous-fonction du véhicule qui est concernée par le problème.

La première détermination est également facilitée lorsque le problème réside dans le placement du véhicule dans un mode dégradé. En effet, dans ce cas, les raisons pour lesquelles le véhicule est passé dans un mode dégradé donné sont parfaitement connues du constructeur.

Une deuxième détermination consiste ensuite à rechercher au moins un constituant candidat qui correspond à l'effet (ou à chaque effet) ou au (ou à chaque) code de défaut qui a été déterminé lors de la première détermination. On comprendra qu'à un effet ou code de défaut peut correspondre dans la table de correspondance TC un ou plusieurs constituants candidats (voire même tous les constituants d'une fonction complète du véhicule).

On notera que lorsque l'on dispose initialement d'un code de défaut pour définir un problème survenu et que ce code de défaut est un code de défaut source associé à au moins un code de défaut induit, on se sert tout d'abord du code de défaut source pour rechercher le(s) constituant(s) candidat(s) correspondant(s). Le(s) code(s) de défaut induit(s) ne seront ensuite utilisés qu'à condition que le(s) constituant(s) déterminé(s) au moyen du code de défaut source ne s'avère(nt) pas la cause effective du problème.

On notera également que lorsque la recherche effectuée lors d'une première détermination aboutie à une combinaison d'effets ou de codes de défaut correspondant à un unique constituant candidat, puis lorsque la recherche effectuée lors de la deuxième détermination avec cette combinaison d'effets ou de codes de défaut aboutie à un unique constituant candidat, il devient alors inutile de poursuivre le procédé et donc de déterminer un ou plusieurs éléments de détection à appliquer à cet unique constituant candidat puisqu'il n'existe pas d'alternative (l'unique constituant candidat ne peut qu'être l'unique cause du problème survenu).

On notera également que lorsque l'on a déterminé plusieurs constituants candidats lors de la deuxième détermination, et que ces constituants candidats sont associés (dans la table de correspondance TC) à des informations complémentaires comme la probabilité d'occurrence (c'est-à-dire la probabilité d'être la cause d'un dysfonctionnement), il est alors possible de trier ces constituants (qui constituent des candidats à la cause du problème) en fonction de leur probabilités d'occurrence respectives. Un tel tri est alors utile lors de la troisième détermination décrite ci-après, puisqu'il permet de savoir immédiatement que le premier constituant candidat auquel on doit appliquer le (ou les) éléments de détection correspondant est celui qui présente la probabilité d'occurrence la plus grande. Puis, si ce premier constituant candidat s'avère ne pas être la cause du problème on peut passer à celui qui est associé à la probabilité d'occurrence qui est la plus proche de la probabilité d'occurrence du premier constituant candidat (et ainsi de suite).

La troisième (et dernière) détermination consiste à rechercher au moins un élément de détection qui doit être appliqué à un constituant candidat déterminé lors de la deuxième détermination afin de contrôler s'il constitue ou non une (ou la) cause du problème survenu.

Par exemple, lorsque le niveau d'eau ne varie pas (ou varie peu) et que le réchauffeur est candidat à la cause, on doit mesurer la température de l'eau.

Par exemple, lorsque le moteur ne démarre pas, il peut y avoir plusieurs causes. On doit donc d'abord s'assurer que le démarreur est bien activé. Pour cela, on vérifie que l'ordre d'activation parvient bien en entrée du démarreur. Ensuite, on doit s'assurer que le démarreur entraîne le moteur à la bonne vitesse (par exemple, il faut que le régime de rotation du moteur soit supérieur à 300 tr/min pendant au moins 3 secondes).

On notera que c'est à la fin de cette troisième détermination (c'est-à-dire une fois que l'on sait qu'un constituant candidat n'est pas la cause d'un problème) que l'on va passer à un autre constituant candidat, par exemple correspondant à un code de défaut induit associé au code de défaut source du précédent constituant candidat testé ou bien à une probabilité d'occurrence plus faible que celle du précédent constituant candidat testé.

On se réfère maintenant à l'unique figure pour décrire un algorithme d'un exemple non limitatif de procédé d'aide au diagnostic selon l'invention.

L'algorithme commence par une étape 10 dans laquelle on détecte au moins un problème dans le véhicule, et on constitue la définition de ce problème.

Puis, dans une étape 20, on détermine dans la table de correspondance TC au moins un effet ou un code de défaut qui correspond au problème survenu, grâce à la définition de ce dernier.

Puis, dans une étape 30, on effectue un test afin de savoir si ce que l'on a déterminé à l'étape 20 est un effet ou un code de défaut. Si le résultat de ce test (30) indique un effet, alors on passe à une étape 50. En revanche, si le résultat de ce test (30) indique un code de défaut, alors on passe à une étape 40. On notera que fréquemment, lorsque l'on a un code de défaut on a également un effet. Il est par conséquent préférable de traiter par codes de défaut car cela permet d'aller plus vite.

L'étape 40 consiste à effectuer un autre test afin de savoir si le code de défaut déterminé à l'étape 20 est un code de défaut source ou un code de défaut induit. Si le résultat de ce test (40) indique que l'on dispose d'un code de défaut induit, alors on passe à une étape 110. En revanche, si le résultat de ce test (40) indique que l'on dispose d'un code de défaut source, alors on passe à l'étape 50.

L'étape 50 consiste à déterminer dans la table de correspondance TC au moins un constituant candidat qui est stocké en correspondance d'un effet ou d'un code de défaut déterminé à l'étape 20.

Puis, dans une étape 60, on détermine dans la table de correspondance TC au moins un élément de détection qui est stocké en correspondance d'un constituant candidat déterminé à l'étape 50.

Puis, dans une étape 70, on applique au constituant candidat déterminé à l'étape 50 le ou les éléments de détection déterminés pour lui à l'étape 60.

Puis, dans une étape 80, on effectue un autre test afin de savoir si le constituant candidat déterminé à l'étape 50 est effectivement la cause du problème. Pour ce faire, on regarde le résultat de l'application de chaque élément de détection à ce constituant candidat, lors de l'étape 70.

Si le constituant candidat s'avère être la cause effective du problème alors l'algorithme prend fin dans une étape 90. Le diagnostic est alors terminé avec succès puisque l'on connaît effectivement la cause du problème survenu (défini à l'étape 10).

En revanche, si le constituant candidat s'avère ne pas être la cause effective du problème alors l'algorithme se poursuit par une étape 100.

L'étape 100 consiste à effectuer un autre test afin de savoir si il reste encore un autre constituant candidat déterminé à l'étape 50 initiale et pour lequel on n'a pas encore déterminé d'élément(s) de détection. Dans l'affirmative, on retourne effectuer l'étape 60 et les étapes suivantes pour un autre constituant candidat déterminé à l'étape 50 initiale (et non testé). Dans la négative on passe à une étape 110.

L'étape 110 consiste à effectuer un autre test afin de savoir si il reste encore un code de défaut induit déterminé à l'étape 20 initiale et pour lequel on n'a pas encore déterminé de constituant candidat.

Dans l'affirmative, on retourne effectuer l'étape 50 et les étapes suivantes pour un autre code de défaut induit déterminé à l'étape 20 initiale (et non utilisé).

Dans la négative l'algorithme prend fin dans une étape 120. Le diagnostic est alors terminé. Il s'agit ici d'un échec de diagnostic puisque l'on n'a pas réussi à déterminer la cause effective du problème survenu (défini à l'étape 10).

L'invention présente un certain nombre d'avantages, parmi lesquels :
- une diminution notable des échecs de diagnostic,
- une réduction importante du temps nécessaire à l'obtention d'un diagnostic fiable,
- une réduction notable des déposes injustifiées, faute de diagnostic fiable,
- une réduction notable du temps passé pour trouver physiquement dans un système complexe le ou les constituants qui sont effectivement défaillants.

L'invention ne se limite pas aux modes de réalisation de procédé d'aide au diagnostic décrits ci-avant, seulement à titre d'exemple, mais elle englobe toutes les variantes que pourra envisager l'homme de l'art dans le cadre des revendications ci-après.

## Revendications

1. Procédé d'aide au diagnostic pour un système complexe qui est un véhicule automobile comprenant des constituants de véhicule automobile participant à des fonctions du véhicule automobile, **caractérisé en ce qu'**il consiste à prévoir une table (TC) de correspondance entre des dysfonctionnements desdits constituants, des effets au sein dudit système et des éléments de détection, et, en cas d'occurrence d'au moins un problème dans ledit système, à déterminer dans ladite table (TC) i) au moins un effet ou un code de défaut correspondant à ce problème, puis ii) au moins un constituant correspondant audit effet ou code de défaut déterminé, puis iii) au moins un élément de détection à appliquer audit constituant déterminé de manière à contrôler s'il constitue une cause dudit problème.

2. Procédé selon la revendication 1, **caractérisé en ce que** l'on détermine dans ladite table (TC) i) chaque effet ou chaque code de défaut correspondant audit problème, puis ii) chaque constituant correspondant à chaque effet ou code de défaut déterminé, puis iii) chaque élément de détection à appliquer audit constituant déterminé de manière à contrôler s'il constitue une cause dudit problème.

3. Procédé selon l'une des revendications 1 et 2, **caractérisé en ce que** lesdits éléments de détection sont choisis dans un groupe comprenant au moins des codes de défaut, des mesures de paramètre(s) interne(s), des commandes d'actionneurs, des tests de cohérence, des tests sensoriels et des tests avec des appareils de mesure.

4. Procédé selon l'une des revendications 1 à 3, **caractérisé en ce qu'**en cas d'une différenciation dans ladite table (TC) entre des codes de défaut dits source et des codes de défaut dits induits, et en cas de détermination dans ladite table (TC) d'un code de défaut source associé à au moins un code de défaut induit, on commence par déterminer dans ladite table (TC) au moins un constituant correspondant audit code de défaut source, puis au moins un élément de détection à appliquer audit constituant déterminé de manière à contrôler s'il constitue une cause dudit problème, et dans la négative on détermine dans ladite table (TC) au moins un constituant correspondant audit code de défaut induit associé au code de défaut source, puis au moins un élément de détection à appliquer audit constituant déterminé de manière à contrôler s'il constitue une cause dudit problème.

5. Procédé selon l'une des revendications 1 à 4, **caractérisé en ce que** lesdits effets sont choisis dans un groupe comprenant au moins des états de voyants, des messages adressés, des modes dégradés de fonctionnement, des constatations définies, et un nombre d'occurrences d'un problème.

6. Procédé selon l'une des revendications 1 à 5, **caractérisé en ce que** certains desdits dysfonctionnements de constituant de la table (TC) sont associés à des informations complémentaires choisies dans un groupe comprenant au moins une probabilité d'occurrence et une situation de vie au cours de laquelle se produit un dysfonctionnement.

7. Procédé selon la revendication 6, **caractérisé en ce qu'**en cas de détermination de plusieurs constituants, on trie ces constituants en fonction de leurs probabilités d'occurrence, et on commence par appliquer chaque élément de détection correspondant au constituant qui est associé à la probabilité d'occurrence la plus élevée, puis on passe au constituant suivant qui est associé à la probabilité d'occurrence qui est la plus proche de la probabilité d'occurrence la plus élevée.

8. Procédé selon l'une des revendications 1 à 7, **caractérisé en ce qu'**en cas de détermination d'une combinaison d'effets ou de codes de défaut correspondant à un unique constituant, on ne détermine pas d'élément de détection à appliquer à cet unique constituant.

9. Procédé selon l'une des revendications 1 à 8, **caractérisé en ce que** l'on détermine dans ladite table (TC) au moins un effet ou un code de défaut et une fonction correspondant audit problème, puis on détermine au moins un constituant correspondant audit effet ou code de défaut et à ladite fonction déterminés.

10. Utilisation du procédé selon l'une des revendications précédentes dans le cas d'un système complexe de type véhicule automobile.
